# EUROPÄISCHE PATENTSCHRIFT

(11) **EP 3 284 010 B1**
(45) Veröffentlichungstag und Bekanntmachung des Hinweises auf die Patenterteilung: **29.05.2024**
(21) Anmeldenummer: 16715238.8
(22) Anmeldetag: 06.04.2016
(51) Int. Cl.: G06V 20/54, G06V 10/46

(54) **VERFAHREN ZUM KLASSIFIZIEREN EINES FAHRZEUGS**
METHOD FOR CLASSIFYING A VEHICLE
PROCÉDÉ DE CLASSIFICATION D'UN VÉHICULE

(30) Priorität: 17.04.2015 DE 102015004938
(43) Veröffentlichungstag der Anmeldung: 21.02.2018
(73) Patentinhaber: Diehl Defence GmbH & Co. KG, 88662 ÜBERLINGEN (DE)
(72) Erfinder: GAGEL, Florian, 88690 Uhldingen-Mühlhofen (DE); KUSHAUER, Jörg, 88693 Deggenhausertal (DE)
(74) Vertreter: Diehl Patentabteilung
(86) Internationale Anmeldenummer: PCT/EP2016/000558
(87) Internationale Veröffentlichungsnummer: WO 2016/165814

(56) Entgegenhaltungen:
- EP-A2- 2 746 990
- DE-A1-102010 020 798
- PSYLLOS A ET AL: "Vehicle model recognition from frontal view image measurements", COMPUTER STANDARDS AND INTERFACES, ELSEVIER SEQUOIA. LAUSANNE, CH, Bd. 33, Nr. 2, 1. Februar 2011 (2011-02-01), Seiten 142-151, XP027514931, ISSN: 0920-5489, DOI: 10.1016/J.CSI.2010.06.005 [gefunden am 2010-06-28]
- BENJAMIN YAO ET AL: "Introduction to a Large-Scale General Purpose Ground Truth Database: Methodology, Annotation Tool and Benchmarks", 27. August 2007 (2007-08-27), ENERGY MINIMIZATION METHODS IN COMPUTER VISION AND PATTERN RECOGNITION; [LECTURE NOTES IN COMPUTER SCIENCE], SPRINGER BERLIN HEIDELBERG, BERLIN, HEIDELBERG, PAGE(S) 169 - 183, XP019097660, ISBN: 978-3-540-74195-4 §2.5, Figur 14, Figure 12
- XAVIER CLADY ET AL: "Multi-class Vehicle Type Recognition System", 2. Juli 2008 (2008-07-02), ARTIFICIAL NEURAL NETWORKS IN PATTERN RECOGNITION; [LECTURE NOTES IN COMPUTER SCIENCE], SPRINGER BERLIN HEIDELBERG, BERLIN, HEIDELBERG, PAGE(S) 228 - 239, XP019091885, ISBN: 978-3-540-69938-5

## Beschreibung

Die Erfindung betrifft eine Verfahren zum Klassifizieren eines Fahrzeugs, bei dem ein Bild des Fahrzeugs aufgenommen wird, aus dem Bild charakteristische Bildmerkmale ermittelt werden, die charakteristischen Bildmerkmale mit Merkmalen aus einer Fahrzeugdatenbank verglichen werden, die eine Vielzahl von charakteristischer Merkmale enthaltende Beschreibungen von verschiedenen Fahrzeugklassen enthält, und das aufgenommene Fahrzeug einer in der Fahrzeugdatenbank beschriebenen Fahrzeugklasse zugeordnet wird.

Ein Verfahren zur Identifikation eines Herstellers eines Kraftfahrzeugs und des Modells des Kraftfahrzeuges anhand von Frontaufnahmen desselben ist beschrieben in Psyllos et al.: Vehicle model recognition from frontal view measurements; Computer standards and interfaces, Elsevier Sequoia, Lausanne, CH, vol. 33, no. 2, February 1, 2011, Seiten 142 - 151. Ein Verfahren zur Erstellung einer kommentierten Bilddatenbank ist bekannt aus Yao et al.: Introduction to a large-scale general purpose ground truth database: Methodology, annotation tool and benchmarks; August 27, 2007, Energy minimization methods in computer vision and pattern recognition, Lecture notes in computer science, Springer Berlin Heidelberg, Seiten 169 - 183.

Angriffe auf Hochseeschiffe können von verschiedenen Fahrzeugen ausgehen, insbesondere von anderen Schiffen oder von Luftfahrzeugen. In komplexen Situationen steht eine Vielzahl von Fahrzeugen in Sichtentfernung, sodass eine Gefahrenabschätzung, von welchem Fahrzeug eine Gefahr für das eigene Schiff ausgeht, schwierig ist.

Die Abschätzung eines eventuellen Bedrohungspotenzials kann erheblich vereinfacht werden, wenn die umgebenen Fahrzeuge zügig nicht nur als solche, sondern auch in ihrer Art und Klasse identifiziert werden. Hierzu ist eine Klassifizierung mittels elektrooptischer Daten (KEOD) bekannt und lange im Einsatz. Wesentlicher Bestandteil dieses Offline-Systems ist eine Datenbank mit Ansichten und Eigenschaften bekannter Fahrzeuge. Die in Sichtweite des eigenen Schiffs befindlichen Fahrzeuge werden mit den in der Datenbank vorhandenen Ansichten verglichen, indem ein Bediener Fahrzeugmerkmale und/oder eine Fahrzeugkontur auf der Basis eines aufgenommenen Bildes des in Sichtweite befindlichen anderen Fahrzeugs eingibt. Seine Eingabe wird mit dem Bestand der Datenbank verglichen, und es erfolgt eine Klassifizierung auf der Grundlage dieses Vergleichs.

Eine solche Klassifizierung kann gerade bei komplexen Bedrohungssituationen mit mehreren Fahrzeugen zu langsam sein, um einer Bedrohung wirksam entgegentreten zu können. Es ist daher eine Aufgabe der vorliegenden Erfindung, ein zügiges Verfahren zum Klassifizieren eines Fahrzeugs anzugeben.

Diese Aufgabe wird durch ein Verfahren gemäß den Merkmalen von Patentanspruch 1 gelöst, bei dem als charakteristische Bildmerkmale Schlüsselpunkte im Bild des Fahrzeugs ermittelt werden, sowie insbesondere zu jedem Schlüsselpunkt zumindest ein mehrdimensionaler Fahrzeugdeskriptor.

Auf die langwierige Eingabe von Merkmalen durch einen Bediener kann verzichtet werden. Die Schlüsselpunkte können automatisiert und damit sehr schnell im Bild des Fahrzeugs ermittelt werden, sodass schon nach sehr kurzer Zeit die Schlüsselpunkte als Vergleichsmerkmale zur Verfügung stehen. Die Fahrzeugdatenbank umfasst wiederum Schlüsselpunkte und/oder die zu jedem Schlüsselpunkt ermittelten mehrdimensionalen Datenbankdeskriptoren, sodass Schlüsselpunkte mit Schlüsselpunkten beziehungsweise Fahrzeugdeskriptoren mit Datenbankdeskriptoren verglichen werden können. Bei Vorliegen eines Vergleichsergebnisses oberhalb eines vorbestimmten Vergleichsgrenzwerts gilt das aufgenommene Fahrzeug als klassifiziert und kann somit als eine Fahrzeugklasse identifiziert werden, zu denen die Schlüsselpunkte bzw. mehrdimensionalen Datenbankdeskriptoren zugeordnet sind.

Um einen Vergleich durchführen zu können, müssen die Schlüsselpunkte beziehungsweise Deskriptoren mit Schlüsselpunkten bzw. Deskriptoren der Fahrzeugdatenbank verglichen werden. Die Fahrzeugdatenbank enthält daher zweckmäßigerweise eine Vielzahl von Beschreibungen von verschiedenen Fahrzeugen, zweckmäßigerweise eine Klasseneinteilung dieser Beschreibungen in verschiedene Klassen. Jede Beschreibung und/oder Klasse, im Folgenden vereinfacht als Fahrzeugklasse bezeichnet, enthält eine Vielzahl von charakteristischen Bildmerkmalen, die von einem oder mehreren gleichen oder ähnlichen Fahrzeugen gewonnen sein können. Die charakteristischen Bildmerkmale sind erfindungsgemäß Schlüsselpunkte und/oder mehrdimensionale Fahrzeugdeskriptoren zu Schlüsselpunkten von Bildern von einem Fahrzeug. Zur Unterscheidung der Begriffe werden im Folgenden die in der Datenbank hinterlegten Fahrzeugdeskriptoren als Datenbankdeskriptoren bezeichnet.

Schlüsselpunkte werden mit einem Merkmalsdetektor aus einem oder mehreren Bildern ermittelt. Ein Merkmalsdetektor ist in der Lage, Punkte in einem Bild zu finden, die das Bild charakterisieren. Ein guter Merkmalsdetektor ist auch bei einer Skalierung, Rotation, bei einer geometrischen Transformation und Beleuchtungsveränderung des aufgenommenen Fahrzeugs in der Lage, die gleichen Schlüsselpunkte in dem erneut aufgenommenen Bild dieses so veränderten Fahrzeugs zu finden.

Es sind eine Reihe von geeigneten Merkmalsdetektoren bekannt, wie beispielsweise der SIFT-Merkmalsdetektor (Scale-Invariant Feature Transform), der SURF-Merkmalsdetektor (Speeded Up Robust Features), der ORB-Merkmalsdetektor (Oriented Fast and Rotated Brief), sowie weitere Verfahren. Das SIFT-Verfahren und der SIFT-Merkmalsdetektor sind beispielsweise beschrieben in Lowe, David G.: Object recognition from local scale-invariant features; Computer vision, 1999; The proceedings of the seventh IEEE international conference on Bd. 2 leee, 1999, S. 1150-1157, und in Lowe, David G.: Distinctive image features from scale-invariant keypoints; International journal of computer vision 60 (2004), Nr. 2, S. 91-110. Das SURF-Verfahren mit dem SURF-Merkmalsdetektor ist beispielsweise beschrieben in Bay, Herbert; Tuytelaars, Tinne; Van Gool, Luc: Surf: Speeded up robust features; Computer Vision-ECCV 2006. Springer, 2006, S. 404-417. Und das ORB-Verfahren mit dem ORB-Merkmalsdetektor ist beispielsweise beschrieben in Rublee, Ethan; Rabaud, Vincent; Konolige, Kurt; Bradski, Gary: ORB: an efficient alternative to SIFT or SURF. In: Computer Vision (ICCV), 2011 IEEE International Conference on IEEE, 2011, S. 2564-2571. Andere bekannte Verfahren für eine Merkmalsfindung und einen automatischen Merkmalsvergleich sind beispielsweise Laplacian of Gaussian (LoG), sowie Normalized Cross-Correlation Function (NCCF). Es können aber auch andere Verfahren verwendet werden, die für einen automatischen Vergleich von Schlüsselpunkten bzw. Deskriptoren geeignet erscheinen.

Vor der Ermittlung der Schlüsselpunkte kann das Bild, aus dem die Schlüsselpunkte gewonnen werden sollen, mit einem Gauß-Filter geglättet werden, um es vom Bildrauschen zu bereinigen. Nach dem Ermitteln der Schlüsselpunkte können diese in einem weiteren Verfahrenschritt auf ihre Robustheit untersucht werden, wobei letztendlich zweckmäßigerweise nur solche ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierung/en zugewiesen wird, basierend auf den Orientierungen der umliegenden Bildgradienten. Zukünftige Berechnungen beziehungsweise Vergleiche können nun auf der Grundlage von Bilddaten durchgeführt werden, die relativ zu den zugewiesenen Orientierungen, und insbesondere auch Skalierungen und Positionierungen, transformiert wurden, um Invarianz für eben diese Transformationen zu gewährleisten.

Aus den so gefundenen Schlüsselpunkten können nun die Deskriptoren ermittelt werden. Hierzu werden die den Schlüsselpunkt umgebenden Bildgradienten ermittelt, die in einem mehrdimensionalen Merkmalsvektor zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, so dass der Schlüsselpunkt im Deskriptor enthalten ist.

Ein nachfolgender Vergleich der Deskriptoren, also der Fahrzeugdeskriptoren mit den Datenbankdeskriptoren, erfolgt mit einem geeigneten Algorithmus, beispielsweise dem Random Sample Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt. Dies kann jedoch bei Bildern, in denen sich gewisse Objekte wiederholen, zu mehrdeutigen Ergebnissen führen. In der Praxis kann deshalb ein Distanzquotient verwendet werden, wobei der beste Match, also der kleinste Abstand, durch den zweitbesten Match geteilt wird. Sehr ähnlichen Ergebnissen kann nun eine kleinere Wahrscheinlichkeit zugeordnet werden, dass der gefundene Match korrekt ist. Beim SIFT-Verfahren können k-d Trees oder andere Suchbäume verwendet werden. Für den Brief-Merkmalsdetektor aus dem ORB-Verfahren kann die Hamming-Distanz der Bit Strings der Deskriptoren verwendet werden. Um die Suche der nächsten Nachbarn zu optimieren, kann auch Locality Sensitive Haching verwendet werden, sodass ähnliche Bit Strings so gehacht werden, dass sie mit großer Wahrscheinlichkeit in denselben Baskets landen.

Beispielhaft wird im Folgenden der SIFT-Merkmalsdetektor ausführlicher beschrieben. Von dem der Analyse zu unterziehenden Bild werden unterschiedlich stark verschwommene Kopien des Bilds erstellt, indem ein Gauß-Filter mehrfach mit zunehmender Stärke auf das Bild angewendet wird oder der gleichbleibende Gauß-Filter immer wieder auf das letzte gefilterte Bild angewendet wird. In der Verschwimmungsskala nebeneinander liegende Bilder werden nun voneinander subtrahiert, was als Difference of Gaussian (DoG) bezeichnet wird. Die unterschiedlich stark verschwommenen Kopien des Bilds und die DoG-Bilder bilden zusammen eine Oktave. Da der Gauß-Filter kontrastreiche Regionen im Bild stark verändert, führt eine Subtraktion der Bilder dazu, dass solche Stellen, an denen sich die Bilder stark verändert haben, also kontrastreiche Regionen, wie Kanten und Ecken, gefunden werden. Die Schlüsselpunkte können nun, wie in der oben angegebenen Veröffentlichung von Lowe aus dem Jahr 2004 vorgeschlagen, gefunden werden. Hierbei werden Schlüsselpunkte, die in einer Fläche liegen und deren Gradienten insofern klein sind, ausgeschieden. Liegt der Schlüsselpunkt auf einer Kante, so ist der Gradient senkrecht zur Kante groß und der Gradient parallel zur Kante klein. Auch solche Schlüsselpunkte werden entfernt. Ein auf einer Ecke liegender Schlüsselpunkt beinhaltet zwei orthogonale und große Gradienten. Solche Schlüsselpunkte sind besonders robust und sollten beibehalten werden.

Da hierbei nur scharfe Konturen im Ausgangsbild gefunden werden, nicht jedoch ebenfalls signifikante weichere Konturen, wird nun - oder bereits vor der Berechnung der Schlüsselpunkte - eine nächsthöhere Oktave gebildet, indem beispielsweise von dem verschwommensten Bild nur jeder zweite Pixel verwendet wird oder das Ausgangsbild verpixelt wird. In einer nächsthöheren Oktave bzw. Bildoktave weist das der Erstellung der Deskriptoren zugrunde liegende Bild also eine niedrigere Auflösung auf als das Bild der niedrigeren Oktave. Die niedrigere Auflösung kann geschaffen werden, indem z.B. je eine Gruppe von Pixeln, insbesondere 2 Pixel oder n x n Pixel, beispielsweise 2 x 2 Pixel, zu einem Pixel zusammengefasst werden, z.B. durch Addition, Mittelwertbildung oder Herausnehmen von nur einem Pixel aus der Gruppe. In dieser zweiten Oktave werden nun wiederum die Schlüsselpunkte bestimmt. Die Schlüsselpunkte umfassen neben ihren x- und y-Koordinaten auch einen Skalenfaktor, also die Angabe der Oktave, aus der sie stammen. Auf diese Weise wird dem Bild des Zielobjekts eine Vielzahl von Schlüsselpunkten zugewiesen. Die den Schlüsselpunkten zugeordneten bzw. die Schlüsselpunkte enthaltenden Deskriptoren enthalten also zweckmäßigerweise auch die Angabe der Oktave, also den Skalenfaktor.

In der Fahrzeugdatenbank kann, jeweils zugeordnet in die verschiedenen Fahrzeugklassen, vorhanden sein: Fahrzeugbilder, Schlüsselpunkte und/oder die zu den Schlüsselpunkten zugehörigen Deskriptoren. Soll nun ein Fahrzeug klassifiziert werden, so werden die Fahrzeugdeskriptoren aus dem aufgenommenen Bild des Fahrzeugs ermittelt. Diese können mit den Datenbankdeskriptoren verglichen werden, die zweckmäßigerweise mit der gleichen Methode aus früheren Bildern des selben oder des gleichen Fahrzeugs ermittelt wurden.

Da aus einem Bild eine Vielzahl von Fahrzeugdeskriptoren extrahiert wird, werden diese - einzeln betrachtet - üblicherweise auch in einer Vielzahl von Klassen zu guten Vergleichsergebnissen führen. Hierbei ist jedoch nicht die Ähnlichkeit eines einzigen Fahrzeugdeskriptors mit einem einzigen Datenbankdeskriptor entscheidend, sondern die Ähnlichkeit aller oder vieler Fahrzeugdeskriptoren mit einer Vielzahl von Datenbankdeskriptoren einer Klasse. Das Vergleichsergebnis kann insofern aus der Summe der Ähnlichkeiten der Fahrzeugdeskriptoren mit Datenbankdeskriptoren einer Fahrzeugklasse beschrieben werden. Überschreitet dieses Vergleichsergebnis einen vorbestimmten Grenzwert, ist die Klassifizierung erfolgreich und das Fahrzeug wird entsprechend klassifiziert. Enthält die Fahrzeugklasse nur ein einziges Fahrzeug, führt die Klassifizierung zu einer Identifizierung des Fahrzeugs. Ansonsten beschränkt sich die Identifizierung des Fahrzeugs auf Identifizierung eines Fahrzeugtyps, beispielsweise einer Schiffsklasse.

Insofern werden die aus dem Bild des Fahrzeugs ermittelten Fahrzeugdeskriptoren in einer vorteilhaften Ausführungsform der Erfindung mit Datenbankdeskriptoren mehrerer in der Fahrzeugdatenbank hinterlegten Fahrzeugklassen verglichen. Die passende Fahrzeugklasse wird erkannt und das Fahrzeug kann dieser Klasse zugeordnet werden.

Entsprechend der Erfindung enthält die Datenbank in mehreren Fahrzeugklassen jeweils mehrere Bilder eines Fahrzeugs aus verschiedenen Perspektiven. Zwar sind die Deskriptoren der Schlüsselpunkte bis zu einem gewissen Grad rotationsinvariant, allerdings führen Perspektivwechsel von mehr als 45° doch häufig zu signifikanten Änderungen der Schlüsselpunkte und der zugehörigen Deskriptoren. Wird beispielsweise ein Schiff von vorne, schräg von vorne, von der Seite, schräg von hinten und von hinten aufgenommen, so enthält die Fahrzeugklasse dieses Schiffs zumindest fünf Bilder beziehungsweise die daraus errechneten Schlüsselpunkte beziehungsweise die daraus errechneten Deskriptoren als Datenbankdeskriptoren. Soll nun das gleiche Schiff oder ein Schwesterschiff klassifiziert werden und liegt ein Bild von dem Schiff von schräg von vorne vor, so wird der Vergleich das entsprechende Bild beziehungsweise die entsprechenden Deskriptoren von schräg von vorne finden, sodass ein Klassifizierung einfach möglich ist.

Zweckmäßigerweise wird das Bild des Fahrzeugs im sichtbaren Spektralbereich und/oder im infraroten Spektralbereich aufgenommen. Entsprechend ist es vorteilhaft, wenn die Datenbankdeskriptoren aus im sichtbaren Spektralbereich und/oder im infraroten Spektralbereich aufgenommenen Fahrzeugbildern ermittelt wurden. Auf diese Weise kann eine zuverlässige Klassifizierung erreicht werden, die beispielsweise auch bei schlechter Sicht beziehungsweise Dunkelheit möglich ist. Weiter können beispielsweise Wasserreflexe, sogenannte Glints, durch die Verwendung eines Infrarotbilds reduziert beziehungsweise eliminiert werden, sodass die Bildung von vermeintlich starken Reflexionsschlüsselpunkten vermieden wird.

Insbesondere bei einem Bedrohungsszenarium ist es sinnvoll, auf eine erkannt potentielle Bedrohung zu reagieren und beispielsweise einen Detektor und/oder eine Effektoreinheit auf das potentiell bedrohliche Fahrzeug zu richten. Der Detektor kann eine Optik sein, beispielsweise zur genaueren Untersuchung des Fahrzeugs. Eine Effektoreinheit kann eine Waffe zum Bekämpfen des Fahrzeugs und/oder einer vom Fahrzeug ausgehenden Bedrohung, wie eine Rakete, sein. Insofern ist es vorteilhaft, wenn die Klassifizierung zwischen zumindest zwei Zuständen des Fahrzeugs unterscheidet, beispielsweise Freund / Feind, Bedrohung / keine Bedrohung, zu untersuchen / nicht zu untersuchen, usw., wobei aus zumindest einem der Zustände Steuerungsschritte abgeleitet werden, wie das Richten des Detektors beziehungsweise einer Effektoreinheit auf das zuvor abgebildete Fahrzeug. Hierzu ist es vorteilhaft, dass eine Richtung des Fahrzeugs ermittelt und bei einem positiven Klassifizierungsergebnis eine entsprechende Einheit auf das Fahrzeug gerichtet wird.

In einer weiteren vorteilhaften Ausführungsform der Erfindung sind in der Fahrzeugdatenbank zu einer Fahrzeugklasse zu mehreren Bildoktaven Datenbankdeskriptoren gespeichert. Die Bildoktaven sind zweckmäßigerweise verschiedenen Bildauflösungen von Fahrzeugen dieser Fahrzeugklasse zugeordnet. Bei einer Aufnahme des Fahrzeugs aus einer weiten Entfernung führt ein Vergleich von Fahrzeugdeskriptoren mit solchen Datenbankdeskriptoren zu einem ausreichenden Vergleichsergebnis, die von einer höheren Oktave stammen, also beispielsweise weiche Strukturen beschreiben. Die Aufnahme des gleichen Fahrzeugs aus einer viel geringeren Entfernung führt jedoch zu Fahrzeugdeskriptoren und diese zu einem ausreichenden Vergleichsergebnis mit Datenbankdeskriptoren einer tieferen Oktave. Hierbei spielt die Oktave eines Datenbankdeskriptors zunächst keine Rolle, da ein Fahrzeugdeskriptor mit Datenbankdeskriptoren von beispielsweise allen Oktaven vergleichen wird. Nach erfolgreichem Vergleich kann aus dem Skalenfaktor des Datenbankdeskriptors auf die durch ihn beschriebene Struktur geschlossen werden und damit auf die Auflösung des Fahrzeugbilds. Ist der Skalenfaktor einer hohen Oktave zugeordnet, so kann daraus geschlossen werden, dass die Auflösung des Fahrzeugbilds deutlich geringer ist als die desjenigen Bilds, aus dem der Datenbankdeskriptor gewonnen wurde.

Gleiches gilt zweckmäßigerweise vice versa auch für die Fahrzeugdeskriptoren. Auch diesen sollte ein Skalenfaktor zugeordnet sein, und es sollten zu einem Fahrzeugbild Fahrzeugdeskriptoren mehrerer Oktaven gebildet werden. Bei einem erfolgreichen Deskriptorenvergleich, im Folgenden auch Match genannt, können die Oktaven verglichen und daraus auf das Verhältnis der Auflösung der Fahrzeugaufnahme der zugrunde liegenden Bilder geschlossen werden. Der Deskriptorvergleich liefert insofern zweckmäßigerweise zusätzlich zur Klassifizierung ein Oktavenverhältnis, aus dem auf ein Verhältnis der Auflösung des Fahrzeugs in den den Deskriptoren zugrunde liegenden Bildern geschlossen werden kann.

Vorteilhafterweise wird aus einem Oktavenverhältnis auf eine Entfernung des Fahrzeugs geschlossen, insbesondere aus bekannten Sichtbedingungen. Umgekehrt kann bei bekannter Entfernung des Fahrzeugs auf Sichtverhältnisse geschlossen werden. Hierzu sind die Oktaven in der Fahrzeugdatenbank zweckmäßigerweise in der Weise normiert hinterlegt, dass den Oktaven Entfernungsangaben zugeordnet sind. Ist beispielsweise für eine bestimmte Optik ein Gegenstand auf einem Schiff erst unterhalb einer Entfernung D in der Weise auflösbar, dass das Fahrzeugbild bei diesem Objekt zu einem Schlüsselpunkt mit dazugehörigem Fahrzeugdeskriptor führt, so kann aus dem Vorliegen dieses Schlüsselpunkts im Fahrzeugbild darauf geschlossen werden, dass das Fahrzeug näher als der Abstand D ist. Insofern ist es vorteilhaft, wenn die Datenbank Optikangaben enthält, die einer Entfernungsangabe zugrunde liegen.

Gemäß der Erfindung ist die Fahrzeugklasse eine Schiffsklasse, und das Bild wird von einem Fahrzeug aus aufgenommen, das ein anderes als das aufgenommene Fahrzeug ist. Beispielsweise wird ein Schiff von einem anderen Schiff oder von einem Flugkörper aus aufgenommen. Oder es wird ein Flugkörper von einem Schiff aus aufgenommen.

Weiter ist es vorteilhaft, wenn das Bild des Fahrzeugs von einem Flugkörper aus aufgenommen wird und anhand der Klassifizierung des Fahrzeugs eine Freund-/Feindunterscheidung vorgenommen wird, insbesondere im Flugkörper. Es kann vorkommen, dass ein Flugkörper auf ein Fahrzeug abgeschossen wird, dessen Entfernung beim Abschuss zu groß für eine zuverlässige Klassifizierung ist. Die Freund-/Feindunterscheidung erfolgt erst während des Flugs des Flugkörpers. Der Flugkörper nähert sich dem Fahrzeug an und nimmt Bilder des Fahrzeugs auf. Diese werden wie oben beschrieben behandelt und es erfolgt eine Fahrzeugklassifizierung des angeflogenen Fahrzeugs. Wird das Fahrzeug als Freund erkannt, kann der Flugkörper seinen Flug abbrechen oder ein alternatives Ziel anfliegen. Sind beispielsweise zwei Fahrzeuge sehr nahe nebeneinander, so dass eine Freund-/Feindunterscheidung bei einem Abschuss noch nicht möglich ist, da beispielsweise ein Bediener die beiden Bilder der Fahrzeuge nicht ausreichend genug trennen kann, so kann die Unterscheidung während des Flug des Flugkörpers erfolgen, so dass Schäden aufgrund von Friendly Fire vermieden werden.

Insbesondere bei der Aufnahme von weit entfernten Schiffen im visuellen Spektralbereich können Sonnenreflexe auf dem Wasser, sogenannte Glints, zu störenden Fahrzeugdeskriptoren scheinbarer Fahrzeugdetails führen. Um dies zu vermeiden, ist es vorteilhaft, wenn die Fahrzeugdeskriptoren aus mehreren überlagerten Bildern des Fahrzeugs erzeugt werden. Beispielsweise können Pixel jeweils über mehrere Bilder gemittelt werden. Durch die Überlagerung können die Glints in ihrem Kontrast soweit reduziert werden, dass sie nicht oder nur unwesentlich zu störenden Fahrzeugdeskriptoren im Bild führen. Zweckmäßigerweise werden auch die Datenbankdeskriptoren aus Bildern ermittelt, die aus mehreren überlagerten Bildern des Fahrzeugs erzeugt wurden.

Bei der Bekämpfung von Fahrzeugen ist es sinnvoll, das Fahrzeug nicht irgendwo von einem Effektor anfliegen zu lassen, sondern den Effektor auf einen vorgegebenen Zielpunkt am Fahrzeug zu richten, an dem der Effektor seine Wirkung in gewünschter Weise entfalten kann. Ein solcher Zielpunkt muss nicht zwingendermaßen bei einer optisch gut sichtbaren Struktur liegen. Eine Navigation des Effektors auf einen solchen quasi unsichtbaren Zielpunkt ist mit passiver optischer Zielführung schwierig. Um eine solche Navigation zu erleichtern, wird vorgeschlagen, dass in der Fahrzeugdatenbank einer Fahrzeugklasse zumindest ein Zielpunkt zugeordnet ist, der einen vorbestimmten Punkt auf einem der Fahrzeugklasse zugeordneten Fahrzeug angibt. Der Zielpunkt kann mit einer Effektorklasse hinterlegt sein, für den der Zielpunkt geeignet ist.

Zweckmäßigerweise ist der Zielpunkt in der Fahrzeugdatenbank in seiner Lage relativ zu der Lage mehrerer Schlüsselpunkte angegeben. Auf diese Weise kann aus der bekannten Lage mehrerer Schlüsselpunkte im Fahrzeugbild auf die Lage des Zielpunkts am aufgenommenen Fahrzeug geschlossen werden. Solche Schlüsselpunkte, zu denen ein Zielpunkt in seiner relativen Lage angegeben ist, sind in der Datenbank zweckmäßigerweise als solche angegeben. Sie werden im Folgenden als Zielschlüsselpunkte bezeichnet. Liegt ein ausreichend gutes Vergleichsergebnis und damit eine Fahrzeugklassifikation vor, so können die Datenbankdeskriptoren, die auch einzeln ein ausreichend hohes Vergleichsergebnis erzielt haben, und die Zielschlüsselpunkten zugeordnet sind bzw. diese beinhalten, dazu verwendet werden, einen Zielpunkt zu finden. Sind zumindest drei Zielschlüsselpunkte identifiziert, so können auch die zugehörigen Fahrzeugschlüsselpunkte als Zielschlüsselpunkte markiert werden. Aus zumindest drei solchen Zielschlüsselpunkten kann die Lage des Zielpunkts berechnet werden. Die Lage eines Punkts kann als Koordinaten des Punkts, eine örtliche Lage im aufgenommenen Fahrzeugbild und/oder eine Richtung des Punkts absolut oder relativ beispielsweise zu einer Ausrichtung einer beobachtenden beziehungsweise aufnehmenden Optik sein.

Vorteilhafterweise sind in der Fahrzeugdatenbank verschiedene Schlüsselpunkte zu mehreren Bildoktaven gespeichert. Zu einer Oktave ist insofern ein erster Schlüsselpunkt und zu einer anderen Oktave ein anderer Schlüsselpunkt gespeichert. Die Bildoktaven sind zweckmäßigerweise als solche angegeben, beispielsweise wie oben beschrieben. Vorteilhafterweise sind die Lagen mehrerer verschiedener Zielpunkte relativ zu mehreren Schlüsselpunkten in mehreren Bildoktaven gespeichert. So ist beispielsweise ein erster Zielpunkt zu einer ersten Bildoktave beziehungsweise Gruppe von Bildoktaven und ein zweiter Zielpunkt zu einer zweiten und von der ersten unterschiedlichen Bildoktave beziehungsweise von der ersten unterschiedlichen Bildoktavgruppe gespeichert. Die Zielpunkte sind insofern zweckmäßigerweise jeweils zumindest einer Bildoktave zugeordnet. Insofern können verschiedene Zielpunkte verschiedenen Bildoktaven zugeordnet sein.

Den verschiedenen Zielpunkten wiederum können verschiedene Effektorklassen beziehungsweise Effektorarten zugeordnet sein. Dieses ist zweckmäßigerweise in der Fahrzeugdatenbank hinterlegt. In Abhängigkeit von einer Bildoktave der den Fahrzeugdeskriptoren zugeordneten Datenbankdeskriptoren kann vorteilhafterweise eine von mehreren Effektorklassen ausgesucht werden. Wird beispielsweise ein Fahrzeug aufgenommen und eine entsprechende Klassifizierung führt zu Datenbankdeskriptoren der ersten Bildoktave, kann eine andere Effektorklasse ausgesucht werden, als wenn die Klassifizierung zu Datenbankdeskriptoren einer anderen Bildoktave führt. Es kann hierdurch eine automatisierte Effektorauswahl erfolgen, insbesondere bei einer möglichen Verknüpfung von Bildoktave mit Entfernung zum Fahrzeug. Beispielsweise kann nach Reichweite eines Effektors entsprechend zur Entfernung des aufgenommenen Fahrzeugs ein Effektor einer für die Entfernung wirksamen Effektorklasse ausgesucht werden.

In einer weiteren vorteilhaften Ausführungsform der Erfindung sind in der Fahrzeugdatenbank zu einer Fahrzeugklasse mehrere Zielpunkte und zu jedem Zielpunkt eine Effektorklasse hinterlegt. So können beispielsweise Zielpunkte verschiedener Effektorklassen zu einer Fahrzeugklasse gespeichert sein. Es können beispielsweise weichere Ziele mit einer kleineren Effektorklasse bekämpft werden, wohingegen härtere Ziele mit einer größeren Effektorklasse bekämpft werden müssen, die jedoch beispielsweise eine höhere Reichweite aufweist und daher früher eingesetzt werden kann. So ist beispielsweise ein erster Zielpunkt einer ersten Effektorklasse und ein zweiter Zielpunkt einer zweiten Effektorklasse zugeordnet, nicht jedoch der ersten Effektorklasse.

Vorteilhafterweise ist der Zielpunkt ein Kommunikationspunkt des Fahrzeugs, ein Weichpunkt und/oder ein Waffenpunkt des Fahrzeugs.

Je nach Entfernung der das Bild des Fahrzeugs aufnehmenden Einheit weist das Fahrzeugbild eine größere oder kleinere Auflösung des Fahrzeugs auf. Kleinere Elemente des Fahrzeugs werden aus großer Entfernung nicht aufgelöst, so dass solche Elemente beschreibenden Datenbankdeskriptoren einer kleineren Entfernung zugeordnet werden können als beispielsweise Deskriptoren zu großflächigeren Strukturen des Fahrzeugs. Selbstverständlich hängt die Auflösung eines Fahrzeugabbilds auch von technischen Daten der aufnehmenden Einheit ab, sie ist jedoch auch durch physikalische Gegebenheiten, wie Luftbrechung und dergleichen begrenzt. Von daher ist es sinnvoll, Datenbankdeskriptoren zu Entfernungsbereichen zuzuordnen, so dass aus den zur Klassifikation herangezogenen Datenbankdeskriptoren ein Entfernungsbereich zum aufgenommenen Fahrzeug abgeschätzt werden kann. Um eine Auswahl eines geeigneten Effektors zu beschleunigen, ist es vorteilhaft, wenn den Datenbankdeskriptoren in der Fahrzeugdatenbank verschiedene Effektorklassen zugeordnet sind. Je nach geschätzter Entfernung des Fahrzeugs kann die geeignete Effektorklasse ausgewählt werden. Insofern wird vorteilhafterweise eine Effektorklasse in Abhängigkeit von den Datenbankdeskriptoren zugeordneten Fahrzeugdeskriptoren bestimmt beziehungsweise ausgewählt.

Bestimmte Zielpunkte eines Fahrzeugs können je nach Perspektive verdeckt sein. Diese sind dann auch für manche Effektoren, insbesondere ballistische Effektoren, schwer zu erreichen. Ein solcher Zielpunkt kann dann - zu mindest aus der momentan vorliegenden Perspektive - nicht angeflogen werden. Sind einer Umgebung eines solchen Zielpunkts Schlüsselpunkte zugeordnet, die erst sichtbar werden, wenn der Zielpunkt angeflogen werden kann, so kann auch zu diesem Schlüsselpunkten zugehörenden Datenbankdeskriptoren vermerkt werden, dass eine bestimmte Effektorklasse erst sinnvoll ist, wenn diese Datenbankdeskriptoren für eine Klassifikation herangezogen wurden. Auch in dieser Hinsicht ist es vorteilhaft, wenn den Datenbankdeskriptoren in der Fahrzeugdatenbank verschiedene Effektorklassen zugeordnet sind. Wechselt die Blickrichtung auf das Fahrzeug, beispielsweise weil dieses sich dem Betrachter gegenüber dreht oder der Betrachter sich um das Fahrzeug herum bewegt und erscheinen neue Datenbankdeskriptoren in den Klassifikation, so kann eine neue Effektorklasse gewählt werden.

In einer weiteren vorteilhaften Ausführungsform der Erfindung sind den Datenbankdeskriptoren verschiedene Effektorverfahren zugeordnet. Ein Effektorverfahren kann einen Bekämpfungsverfahren, ein Aufnahmeverfahren, ein Anflugverfahren oder dergleichen sein. So sind beispielsweise Bekämpfungsmodi abhängig von der Entfernung zum Fahrzeug und/oder einer Blickrichtung auf das Fahrzeug. Ein Fahrzeug sollte beispielsweise von vorne anders bekämpft werden als von der Seite. Vorteilhafterweise wird ein Effektorverfahren in Abhängigkeit von den in der Klassifikation verwendeten Datenbankdeskriptoren bestimmt bzw. ausgewählt.

Weiter ist die Erfindung gerichtet auf einen Datenträger gemäß den Merkmalen von Patentanspruch 13 enthaltend eine Fahrzeugdatenbank mit einer Vielzahl von Beschreibungen von verschiedenen Fahrzeugen, die jeweils eine Vielzahl von charakteristischen Bildmerkmalen eines Fahrzeugs enthalten.

Es wird vorgeschlagen, dass die charakteristischen Bildmerkmale erfindungsgemäß mehrdimensionale Fahrzeugdeskriptoren zu Schlüsselpunkten von Bildern der Fahrzeuge sind.

Es zeigen:
- FIG 1: die Darstellung eines Schiffs auf einem Bild und in mehreren Segmenten einer Fahrzeugdatenbank,
- FIG 2: eine schematische Darstellung der Fahrzeugdatenbank und
- FIG 3: ein Ablaufdiagramm eines Verfahrens zum Klassifizieren eines Fahrzeugs.

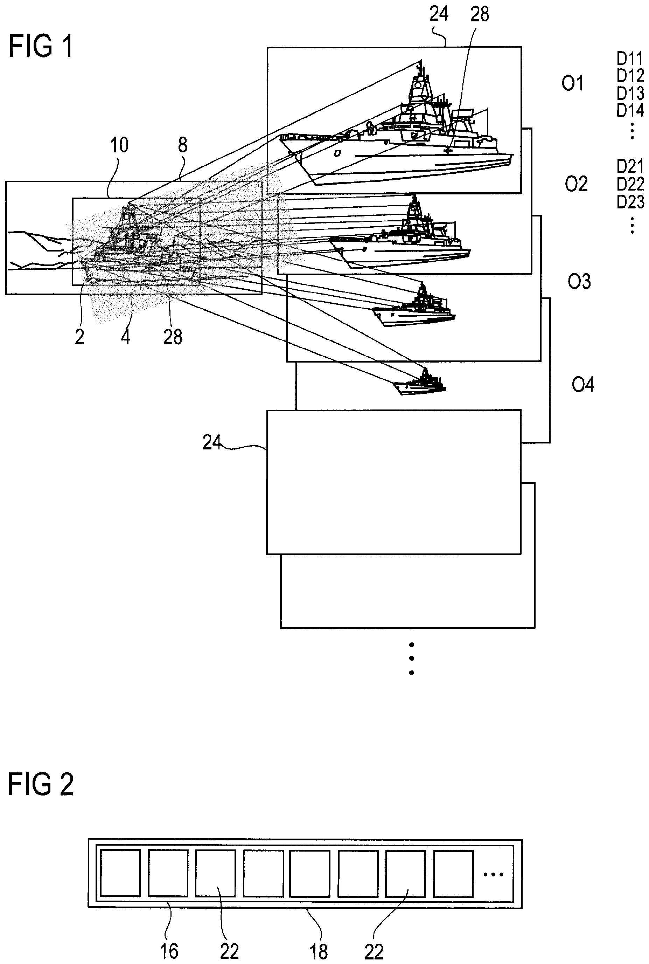

FIG 1 zeigt auf seiner rechten Seite ein Fahrzeug 2 in Form eines Hochseeschiffs, das beispielsweise von einem anderen Schiff aus aufgenommen wurde. Hierzu wurde eine optische Einheit auf das Fahrzeug 2 gerichtet, und es wurden im Abstand von beispielsweise 0,5 Sekunden zehn Bilder von dem Fahrzeug 2 aufgenommen. Die Bilder wurden addiert und die Helligkeit des Summenbildes auf die Helligkeit eines Einzelbildes reduziert. Hierdurch wurden einzelne Reflexe 4 von Sonnenstrahlen auf dem Wasser soweit reduziert, dass nur wenige hervortretende und somit charakteristische Bildelemente aus den Wasserreflexen 4 resultieren.

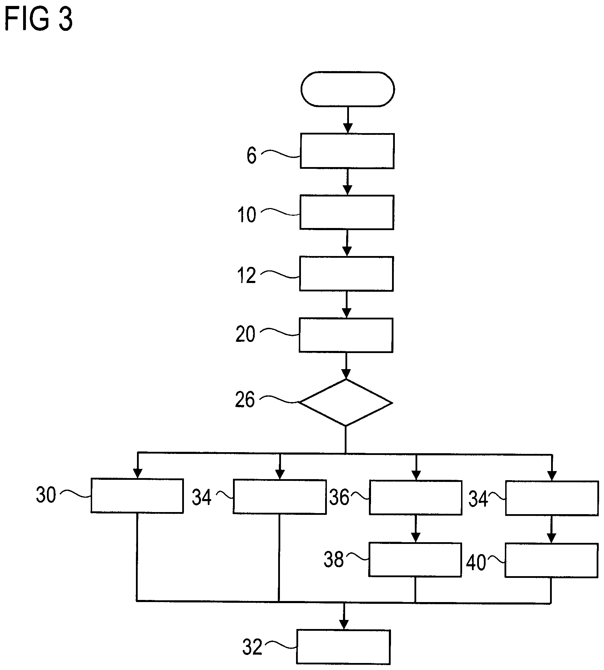

Dieser Schritt der Bildaufnahme ist in dem Ablaufdiagramm aus FIG 3 in Schritt 6 dargestellt. Anschließend wird aus dem Gesamtbild 8 ein Ausschnitt 14 von beispielsweise einem Bediener herausgegriffen, in dem das Fahrzeug 2 abgebildet ist. Dies geschieht beispielsweise, indem der Bediener einen Rahmen um das Fahrzeug 2 legt und hierdurch den Ausschnitt 14 zur weiteren Bearbeitung markiert. Die übrigen Bildflächen werden für diese weitere Bearbeitung nicht verwendet. Der entsprechende Verfahrensschritt 10 ist auch in FIG 3 wiedergegeben.

Im nächsten Verfahrensschritt 12 werden aus dem Bild 8 des Fahrzeugs 2 Schlüsselpunkte und zu diesen jeweils zugehörige Deskriptoren bestimmt. Dies geschieht beispielsweise nach dem SIFT-Verfahren oder dem SURF-Verfahren. Das SURF-Verfahren arbeitet im Wesentlichen wie das SIFT-Verfahren, wobei jedoch in den einzelnen Rechenschritten zur Bestimmung der Schlüsselpunkte und Deskriptoren etwas andere Algorithmen verwendet werden. Es liegt nach diesem Schritt eine Anzahl von Schlüsselpunkten und zu jedem Schlüsselpunkt ein 64-dimensionaler Fahrzeugdeskriptor vor.

Eine Mehrzahl oder alle der so gewonnenen Fahrzeugdeskriptoren werden nun mit Inhalten einer Fahrzeugdatenbank 16, die in FIG 2 schematisch dargestellt ist und die auf einem Datenträger 18 gespeichert ist, im Schritt 20 aus FIG 3 verglichen.

Die Fahrzeugdatenbank 16 enthält eine Vielzahl von Abschnitten 22, in denen jeweils die Daten einer Fahrzeugklasse hinterlegt sind. Die Fahrzeugklassen beziehen sich auf unterschiedliche Schiffsklassen, wobei jede Fahrzeugklasse genau eine Schiffsklasse beinhaltet. Eine Schiffsklasse umfasst sämtliche im Wesentlichen identische Schiffe, die aus einer Schwesternbaureihe mehrerer Schiffe vorhanden sind und die - wie bei Schwesterschiffen üblich - im Wesentlichen gleich aussehen. In manchen Fahrzeugklassen beziehungsweise Abschnitten 22 sind die Daten lediglich eines einzigen Schiffs hinterlegt.

Jeder Datenbankabschnitt 22 enthält eine Vielzahl von Segmenten 24. Jedes Segment 24 umfasst Bilddaten eines Bildes eines Fahrzeugs der entsprechenden Fahrzeugklasse. Ein Segment 24 kann hierbei das Fahrzeugbild an sich und/oder aus diesem Bild gewonnene charakteristische Bildmerkmale, wie Schlüsselpunkte und Deskriptoren beinhalten. Bei der Darstellung aus FIG 1 ist ein Segment 24 mit mehreren Abschnitten gezeigt und ein weiteres Segment mit ebenfalls einer Mehrzahl von Abschnitten, wie durch die drei Punkte angedeutet ist. Diese Darstellung dient nur der Übersichtlichkeit und muss nicht die Datenbankstruktur wiedergeben.

Jedes Segment 24 umfasst einen Satz Datenbankdeskriptoren, die in analoger Weise gewonnen wurden, wie die Fahrzeugdeskriptoren aus dem Bild 8. Ein Segment 24 ist einer Darstellung des Fahrzeugs aus einer einzigen Perspektive zugeordnet. Das nächste Segment 24 ist einer Darstellung des Fahrzeugs aus einer anderen Perspektive zugeordnet. Ein Datenbankabschnitt 22 umfasst in diesem Ausführungsbeispiel neun Segmente mit Aufnahmen eines Schiffs aus der Schiffsklasse von vorne, schräg von vorne, von der Seite, schräg von hinten, von hinten, schräg von oben vorne, schräg von oben von der Seite, schräg von hinten und senkrecht von oben.

Der besseren Darstellung halber ist im oberen Segment 24 das Fahrzeug der betreffenden Klasse abgebildet, in diesem Beispiel schräg von vorne. Die Abbildung muss jedoch nicht Teil des Segments 24 sein, denn es ist ausreichend, wenn die Datenbankdeskriptoren, die aus dem Bild schräg von vorne gewonnen wurden, im Segment 24 gespeichert sind. Um einen visuellen Abgleich zu ermöglichen, kann das reale Bild jedoch ebenfalls im Segment gespeichert sein.

Im Prinzip enthält ein Segment 24 die charakteristischen Merkmale des Bilds 8 als einen Satz Deskriptoren, die aus mehreren Bildoktaven eines Bilds gewonnen wurden. Zu jedem Datenbankdeskriptor ist der Skalenfaktor gespeichert, so dass bekannt ist, aus welcher Oktave der Deskriptor stammt. Bei der in FIG 1 gewählten Darstellung wurde der Satz von aus einem Bild gewonnenen Deskriptoren in vier Bereiche zerlegt, die jeweils eine Bildoktave zeigen. In der ersten (obersten) Oktave O1 ist das Bild in vollständiger Auflösung gezeigt. Die zweite Oktave O2 besteht aus 1/4 der ursprünglichen Pixel, die dritte Oktave O3 aus 1/16 der ursprünglichen Pixel und die vierte Oktave O4 aus 1/64 der ursprünglichen Pixel. Auch weitere Oktaven 05, O6 usw. sind denkbar. Die unterschiedlichen Auflösungen sind in FIG 1 durch verkleinerte Bilddarstellungen des Fahrzeugs gezeigt, wobei hierzu äquivalent eine gleichbleibende Bildgröße mit immer weiter verschwimmenden Bildkonturen ist. Die Pixelzahl jedes Segments 24 kann also auch gleich sein, so dass die Bilder zwar rechnerisch die gleiche Auflösung haben, das Fahrzeug im Bild jedoch von der ersten zur nächstfolgenden Oktave immer verschwommener dargestellt ist.

Die höheren Oktaven können aus der vorhergehenden oder der ersten Oktave durch mathematische Verfahren, beispielsweise einen Gaußfilter, erstellt werden. Zur Annäherung an realistische Gegebenheiten ist jedoch nicht nur die Auflösung beziehungsweise Bildschärfe verringert, sondern es wird zur jeweils nächst niedrigeren Oktave auch ein immer stärkerer Grauschleier über das Bild gelegt, um Lufttrübungen insbesondere bei diesigem Wetter, mit wachsendem Abstand zum beobachteten Fahrzeug 2 besser simulieren zu können. Zweckmäßigerweise wird ein mathematischer Filter verwendet, der reale Sichtbedingungen mit wachsendem Abstand simuliert. Aus diesen einzelnen Oktaven wurden die Deskriptoren Dᵢᵢ ermittelt, wobei die Deskriptoren D₁ᵢ die Deskriptoren der ersten Oktave O1 sind, die Deskriptoren D₂ᵢ die Deskriptoren der zweiten Oktave O2 sind, usw. Alle Deskriptoren Dᵢᵢ können jedoch zusammen im Datensatz eines Segments 24 gespeichert sein ohne Trennung nach Oktaven.

Zum Vergleich beziehungsweise zur Klassifizierung wird nun der Datensatz aus Fahrzeugdeskriptoren mit den Datensätzen der Datenbankdeskriptoren der einzelnen Segmente 24 aller oder nur einzelner Datenbankabschnitte 22 verglichen. Für den Vergleich bei der Klassifizierung kann ein sogenannter FLANN-Matcher (Fast Approximate Nearest Neighbour Search) verwendet werden, welcher eine fehlertolerante Zuordnung ermöglicht. Bei dem Ausführungsbeispiel aus FIG 1 ist beispielhaft durch gerade Linien dargestellt, wie einzelne Fahrzeugdeskriptoren aus dem Bild 8 mit einzelnen Datenbankdeskriptoren aus einem Segment 24 korrelieren.

Bei der Darstellung aus FIG 1 ist die Korrelation in die Bildoktaven unterteilt, was jedoch real nicht der Fall ist und nur der besseren Übersichtlichkeit dient. Es ist zu sehen, dass die höchste Korrelation, also das beste Vergleichsergebnis, in der zweiten Oktave erreicht wird, deren Deskriptoren D₂ᵢ am besten mit den Fahrzeugdeskriptoren korrelieren. Hier liegen die meisten Matches vor, also Vergleichsergebnisse über einem vorbestimmten Grenzwert.

Es wird nun in Schritt 26 aus FIG 3 geprüft, ob das Vergleichsergebnis insgesamt, also aller Fahrzeugdeskriptoren, oberhalb eines festgelegten Grenzwerts liegt, ab dem eine Klassifizierung als erfolgreich gilt. Bei dem in FIG 1 gezeigten Ausführungsbeispiel sei das Vergleichsergebnis über dem Grenzwert, so dass die Klassifizierung bejaht wird. Gelingt hingegen keine Klassifizierung, liegt also das Vergleichsergebnis des Satzes charakteristischer Fahrzeugmerkmale zu jedem der Datenbankabschnitte 22 mit den charakteristischen Datenbankmerkmalen unterhalb des Grenzwerts, so springt das Verfahren wieder auf den Verfahrensschritt 6 und es wird ein erneutes Bild 8 des Fahrzeugs 2 aufgenommen. Diese Schleife wird solange durchlaufen, bis das Verfahren entweder durch einen Bediener oder eine Automatik abgebrochen oder eine erfolgreiche Klassifizierung erzielt wird.

Die Klassifizierung wird nun dem Bediener ausgegeben und diesem wird sowohl das Bild des Fahrzeugs 2 angezeigt und zwar aus der Sicht, also dem Segment 24, in der die Klassifizierung erfolgte, in der ersten Oktave, also hoch aufgelöst. Der Bediener kann nun die erfolgte Klassifizierung bestätigen oder verwerfen. Dieser Schritt der Bedienerüberprüfung ist optional.

Durch die erfolgreiche Klassifizierung wird dem Bild des Fahrzeugs 2 der Inhalt der Fahrzeugklasse, also des Datenbankabschnitts 22, zugeordnet. Dieser umfasst neben den charakteristischen Bildmerkmalen, also den Datenbankdeskriptoren, in denen die Koordinaten der zugehörigen Schlüsselpunkte enthalten sein können, auch mehrere Zielpunkte 28. Ein Zielpunkt 28 ist ein Punkt auf einem Fahrzeug, der beispielsweise als Anflugpunkt eines Flugkörpers dient. Der Flugkörper kann ein angetriebener oder nicht angetriebener, gesteuerter oder rein ballistischer Flugkörper sein. Der Zielpunkt 28 wurde beispielsweise manuell festgelegt und in der Datenbank 16 in seiner Relativposition zu einigen oder allen Zielschlüsselpunkten eines Segments 24 angegeben. Ein Zielschlüsselpunkt ist hierbei ein Schlüsselpunkt, der in einer beschriebenen Position zu einem Zielpunkt 28 liegt.

Bei dem Vergleich der Fahrzeugdeskriptoren mit den Datenbankdeskriptoren ist es wahrscheinlich, dass nicht alle Fahrzeugdeskriptoren jeweils mit einem Datenbankdeskriptor eines Segments 24 korrelieren. Eine Korrelation über dem Vergleichsgrenzwert setzt jedoch voraus, dass eine genügende Anzahl von Fahrzeugdeskriptoren mit Datenbankdeskriptoren eines Segments 24 korrelieren. Liegen nun zumindest drei erfolgreich korrelierte Datenbankdeskriptoren mit Zielschlüsselpunkten vor, so können diese Zielschlüsselpunkte auch im Bild 8 des Fahrzeugs 2 wiedergefunden werden. Entweder die Zielschlüsselpunkte oder die zugehörigen Datenbankdeskriptoren tragen die Positionsangaben relativ zum Zielpunkt 28, so dass auch der Zielpunkt 28 im Bild 8 des Fahrzeugs 2 bestimmt werden kann, wie in FIG 1 beispielhaft dargestellt ist.

Ein Fahrzeug 2 kann eine Vielzahl von Zielpunkten 28 aufweisen, die jedoch nicht in allen Segmenten 24 der entsprechenden Fahrzeugklasse sichtbar sind, weil sie beispielsweise verdeckt sind. Insofern sind die Zielpunkte 28 in den einzelnen Segmenten 24 einer Fahrzeugklasse teilweise unterschiedlich. Außerdem sind die Zielpunkte 28 in der Fahrzeugdatenbank 16 einzelnen Bildoktaven zugeordnet. So ist beispielsweise der in FIG 1 dargestellte Zielpunkt der ersten Oktave O1 und der zweiten Oktave O2 zugeordnet. Den weiteren Oktaven O3, O4, ... sind entweder andere oder keine Zielpunkte zugeordnet.

Bei dem im FIG 1 dargestellten Ausführungsbeispiel liegen die meisten der korrelierten Datenbankdeskriptoren in der zweiten Oktave O2. Dies ist daher die Korrelationsoktave - wobei auch die korrelierenden Datenbankdeskriptoren anderer Oktaven zur Klassifikation herangezogen werden können. Die Korrelationsoktave bestimmt den Zielpunkt 28, der wie im Folgenden beschrieben weiterverarbeitet wird.

Der oder die Zielpunkte 28 der Korrelationsoktave werden zum Steuern eines Flugkörpers beziehungsweise eines Effektors verwendet. Nach einer erfolgreichen Klassifikation 26 können eine Reihe von alternativen Verfahrensvarianten verfolgt werden, die beispielhaft in FIG 3 dargestellt sind. Entsprechend verästelt die Verfahrenslinie aus dem Flussdiagramm aus FIG 3 in verschiedene Zweige, die jeweils eine mögliche Verfahrensvariante darstellen und entweder vorausgewählt sind, automatisch ausgewählt oder vom Bediener ausgewählt werden.

Zunächst besteht die Möglichkeit der Freund-/ Feinderkennung in Verfahrensschritt 30. Anhand der Klassifikation wird geprüft, ob es sich bei dem aufgenommenen Fahrzeug 2 um einen Freund oder einen Feind handelt. Ist beispielsweise eine Bekämpfung des Fahrzeugs 2 erwünscht, so wird ein Effektor, beispielsweise ein Flugkörper, wie eine Lenkrakete oder ein Geschoss, nur dann auf das Fahrzeug 2 beziehungsweise dessen Zielpunkt 28 gerichtet, wenn das Fahrzeug 2 ein feindliches Fahrzeug 2 ist. Entsprechend wird der Effektor beziehungsweise eine Effektoreinheit, wie ein Abschussrohr, auf das Fahrzeug 2 beziehungsweise dessen Zielpunkt 28 gerichtet. Hierzu wird die Richtung des Fahrzeugs 2 beziehungsweise des Zielpunkts 28 zum Effektor beziehungsweise zur Effektoreinheit bestimmt. Dieser ergibt sich aus der Lage der bildaufnehmenden Optik, die das Bild 8 aufgenommen hat, sowie der Lage des Fahrzeugs 2 beziehungsweise des Zielpunkts 28 im Bild 8. Der Effektor wird in Verfahrensschritt 32 anhand der Datenbankdaten, nämlich anhand der Klassifikation und der Lage des Zielpunkts 28 relativ zu Zielschlüsselpunkten, gesteuert.

Eine weitere Verfahrensvariation besteht darin, in Schritt 34 den Zielpunkt 28 oder mehrere Zielpunkte 28 im Bild 8 des Fahrzeugs 2 anhand der Datenbankinformationen zu ermitteln. Anschließend wird ein Effektor auf den Zielpunkt 28 gesteuert.

Ein weiteres Verfahren sieht vor, in Verfahrensschritt 36 die Korrelationsoktave zu bestimmen, im vorliegenden Ausführungsbeispiel also die zweite Oktave O2. Der Oktave ist beispielsweise ein Effektortyp beziehungsweise Effektor zugeordnet, so dass die Wahl des Effektors automatisiert erfolgen kann. Entsprechend wird in Schritt 38 der Effektor ausgewählt und in Schritt 32 gesteuert.

Nach der Zielpunktermittlung aus Schritt 34 kann in Schritt 40 ein Effektor ausgewählt werden, der auf den Zielpunkt 28 gesteuert werden soll. Der Effektor beziehungsweise die Effektorklasse ist hierbei zu jedem Zielpunkt 28 hinterlegt. Hierbei können gleiche Zielpunkte 28 in unterschiedlichen Oktaven mit unterschiedlichen Effektoren beziehungsweise Effektorklassen verknüpft sein, je nach Reichweite des entsprechenden Effektors beziehungsweise der Effektorklasse.

Möglich ist es auch, den Effektor ohne einen Zielpunkt direkt auszuwählen. Die entsprechenden Daten sind beispielsweise in der Korrelationsoktave des Segments 24 hinterlegt. Sind mehrere unterschiedliche Zielpunkte 28 dieser Korrelationsoktave zugeordnet, die mit unterschiedlichen Effektoren bekämpft werden sollten, so ist diese Verfahrensvariation nicht zielführend und die Effektorwahl sollte in Schritt 40 erfolgen.

### Bezugszeichenliste

- 2: Fahrzeug
- 4: Reflex
- 6: Bildaufnahme
- 8: Bild
- 10: Bildausschnitt wählen
- 12: Deskriptoren bestimmen
- 14: Ausschnitt
- 16: Fahrzeugdatenbank
- 18: Datenträger
- 20: Vergleich
- 22: Abschnitt
- 24: Segment
- 26: Prüfung des Vergleichsergebnisses
- 28: Zielpunkt
- 30: Freund- / Feinderkennung
- 32: Steuerung
- 34: Zielpunktermittlung
- 36: Oktavbestimmung
- 38: Effektorwahl
- 40: Effektorwahl

## Patentansprüche

1. Verfahren zum Klassifizieren und Bekämpfen eines Fahrzeugs (2), bei dem
a) ein Bild (8) des Fahrzeugs (2) aufgenommen wird (6),
b) aus dem Bild (8) charakteristische Bildmerkmale ermittelt werden (12), wobei als charakteristische Bildmerkmale Schlüsselpunkte im Bild (8) des Fahrzeugs (2) ermittelt werden (12) und zu jedem Schlüsselpunkt zumindest ein mehrdimensionaler Fahrzeugdeskriptor ermittelt wird,
c) die charakteristischen Bildmerkmale mit Merkmalen aus einer Fahrzeugdatenbank (16) verglichen werden (20), die eine Vielzahl von charakteristische Merkmale enthaltende Beschreibungen von verschiedenen Fahrzeugklassen enthält und in welcher einer Fahrzeugklasse zumindest ein Zielpunkt (28) zugeordnet ist, der einen vorbestimmten Punkt auf einem der Fahrzeugklasse zugeordneten Fahrzeug angibt, an dem ein Effektor seine Wirkung in gewünschter Weise entfalten kann, wobei der Zielpunkt (28) in seiner Lage relativ zu der Lage mehrerer Schlüsselpunkte angegeben ist,
d) das aufgenommene Fahrzeug (2) einer in der Fahrzeugdatenbank (16) beschriebenen Fahrzeugklasse zugeordnet wird (26),
e) aus der Lage mehrerer Schlüsselpunkte im Bild des Fahrzeugs die Lage eines Zielpunkts (28) am aufgenommenen Fahrzeug (2) ermittelt wird,
f) in der Fahrzeugdatenbank (16) Datenbankdeskriptoren (Dᵢᵢ) zu mehreren Bildoktaven (Oᵢ) gespeichert sind und in Abhängigkeit von einer Bildoktave (Oᵢ) der den Fahrzeugdeskriptoren zugeordneten Datenbankdeskriptoren (Dᵢᵢ) eine Entfernungsgröße zum Fahrzeug (2) bestimmt wird sowie eine von der Entfernungsgröße abhängige Effektorklasse.

2. Verfahren nach Anspruch 1,
wobei die Fahrzeugdatenbank (16) in mehreren Fahrzeugklassen jeweils mehrere Bilder eines Fahrzeugs aus verschiedenen Perspektiven enthält.

3. Verfahren nach Anspruch 1 oder 2,
wobei in der Fahrzeugdatenbank (16) zu einer Fahrzeugklasse zu mehreren Bildoktaven (Oᵢ) Datenbankdeskriptoren (Dᵢᵢ) gespeichert sind, die verschiedenen Bildauflösungen von Fahrzeugen dieser Fahrzeugklasse zugeordnet sind.

4. Verfahren nach einem der vorhergehenden Ansprüche,
wobei die Fahrzeugklasse eine Schiffsklasse ist und das Bild (8) von einem anderen als das aufgenommene Fahrzeug (2) aus aufgenommen wird.

5. Verfahren nach einem der vorhergehenden Ansprüche,
wobei das Bild (8) des Fahrzeugs (2) von einem Flugkörper aus aufgenommen wird und anhand der Klassifizierung des Fahrzeugs (2) im Flugkörper eine Freund-/Feindunterscheidung (30) vorgenommen wird.

6. Verfahren nach einem der vorhergehenden Ansprüche,
wobei die Fahrzeugdeskriptoren (Dᵢᵢ) aus mehreren überlagerten Bildern des Fahrzeugs erzeugt werden und auch die Datenbankdeskriptoren (Dᵢᵢ) aus Bildern ermittelt wurden, die aus mehreren überlagerten Bildern eines Fahrzeugs erzeugt wurden.

7. Verfahren nach einem der vorhergehenden Ansprüche,
wobei in der Fahrzeugdatenbank (16) Schlüsselpunkte zu mehreren Bildoktaven (Oᵢ) gespeichert sind und die Positionen der verschiedenen Zielpunkte jeweils einer Bildoktave (Oᵢ) zugeordnet sind.

8. Verfahren nach Anspruch 7,
wobei in der Fahrzeugdatenbank verschiedenen Bildoktaven (Oᵢ) der Zielpunkte (28) verschiedenen Effektorklassen zugeordnet sind und in Abhängigkeit von einer Bildoktave (Oᵢ) der den Fahrzeugdeskriptoren zugeordneten Datenbankdeskriptoren (Dᵢᵢ) eine von mehreren Effektorklassen ausgesucht wird.

9. Verfahren nach einem der vorhergehenden Ansprüche,
wobei in der Fahrzeugdatenbank (16) zu einer Fahrzeugklasse mehrere Zielpunkte (28) in ihrer relativen Lage zu Schlüsselpunkten gespeichert sind, zu jedem Zielpunkt (28) eine Effektorklasse hinterlegt ist und Zielpunkte (28) verschiedener Effektorklassen zu einer Fahrzeugklasse gespeichert sind.

10. Verfahren nach einem der vorhergehenden Ansprüche,
wobei der Zielpunkt (28) ein Kommunikationspunkt des Fahrzeugs (2) ist.

11. Verfahren nach einem der vorhergehenden Ansprüche,
wobei Datenbankdeskriptoren (Dᵢᵢ) in der Fahrzeugdatenbank (16) verschiedene Effektorklassen zugeordnet sind und eine Effektorklasse in Abhängigkeit von den in der Klassifikation verwendeten Datenbankdeskriptoren (Dᵢᵢ) bestimmt wird.

12. Verfahren nach einem der vorhergehenden Ansprüche,
wobei Datenbankdeskriptoren (Dᵢᵢ) in der Fahrzeugdatenbank (16) verschiedene Effektorverfahren zugeordnet sind und ein Effektorverfahren in Abhängigkeit von den in der Klassifikation verwendeten Datenbankdeskriptoren (Dᵢᵢ) bestimmt wird.

13. Datenträger (18) enthaltend eine Fahrzeugdatenbank (16) zur Durchführung eines Verfahrens nach einem der vorhergehenden Ansprüche mit einer Vielzahl von Beschreibungen von verschiedenen Fahrzeugklassen, die jeweils eine Vielzahl von charakteristischen Bildmerkmalen einer Fahrzeugklasse enthalten, wobei
a) die charakteristischen Bildmerkmale mehrdimensionale Fahrzeugdeskriptoren zu Schlüsselpunkten von Bildern von Fahrzeugen einer Fahrzeugklasse sind,
b) jeder Fahrzeugklasse in der Fahrzeugdatenbank (16) zumindest ein Zielpunkt (28) zugeordnet ist, der einen vorbestimmten Punkt auf einem der Fahrzeugklasse zugeordneten Fahrzeug (2) angibt, an dem ein Effektor seine Wirkung in gewünschter Weise entfalten kann, und der Zielpunkt (28) in seiner Lage relativ zu der Lage mehrerer Schlüsselpunkte angegeben ist,
c) in der Fahrzeugdatenbank (16) Datenbankdeskriptoren (Dᵢᵢ) zu mehreren Bildoktaven (Oᵢ) gespeichert sind zur Bestimmung einer Entfernungsgröße zum Fahrzeug (2) in Abhängigkeit von einer Bildoktave (Oᵢ) der den Fahrzeugdeskriptoren zugeordneten Datenbankdeskriptoren (Dᵢᵢ) sowie einer von der Entfernungsgröße abhängigen Effektorklasse.

## Claims

1. Method for classifying and fighting a vehicle (2), in which
a) an image (8) of the vehicle (2) is recorded (6),
b) characteristic image features are determined (12) from the image (8), the characteristic image features determined (12) being key points in the image (8) of the vehicle (2), and at least one multidimensional vehicle descriptor being determined for each key point,
c) the characteristic image features are compared (20) with features from a vehicle database (16) which contains a multiplicity of descriptions, containing characteristic features, of different vehicle classes and in which a vehicle class has at least one assigned target (28), which indicates a predetermined point on a vehicle assigned to the vehicle class at which an effector can unfold its effect in a desired manner, the target (28) being indicated in its location relative to the location of multiple key points,
d) the recorded vehicle (2) is assigned (26) to a vehicle class described in the vehicle database (16),
e) the location of a target (28) on the recorded vehicle (2) is determined from the location of multiple key points in the image of the vehicle,
f) the vehicle database (16) stores database descriptors (Dᵢᵢ) for multiple image octaves (Oᵢ), and an image octave (Oᵢ) of the database descriptors (Dᵢᵢ) assigned to the vehicle descriptors is taken as a basis for determining a range variable for the vehicle (2), and also an effector class dependent on the range variable.

2. Method according to Claim 1,
wherein the vehicle database (16) respectively contains multiple images of a vehicle from different perspectives in multiple vehicle classes.

3. Method according to Claim 1 or 2,
wherein the vehicle database (16) stores database descriptors (Dᵢᵢ) for multiple image octaves (Oᵢ) for a vehicle class, which descriptors are assigned to different image resolutions of vehicles of this vehicle class.

4. Method according to one of the preceding claims,
wherein the vehicle class is a ship class and the image (8) is recorded from a vehicle other than the recorded vehicle (2).

5. Method according to one of the preceding claims,
wherein the image (8) of the vehicle (2) is recorded from a flying object and the classification of the vehicle (2) is used in the flying object to carry out friend/foe discrimination (30).

6. Method according to one of the preceding claims,
wherein the vehicle descriptors (Dᵢᵢ) are generated from multiple superimposed images of the vehicle, and the database descriptors (Dᵢᵢ) have also been determined from images which were generated from multiple superimposed images of a vehicle.

7. Method according to one of the preceding claims,
wherein the vehicle database (16) stores key points for multiple image octaves (Oᵢ), and the positions of the different targets are respectively assigned to an image octave (Oᵢ).

8. Method according to Claim 7,
wherein different image octaves (Oᵢ) of the targets (28) have different assigned effector classes in the vehicle database, and an image octave (Oᵢ) of the database descriptors (Dᵢᵢ) assigned to the vehicle descriptors is taken as a basis for picking one of multiple effector classes.

9. Method according to one of the preceding claims,
wherein the vehicle database (16) stores multiple targets (28) for a vehicle class in their relative location with respect to key points, an effector class is stored for each target (28), and targets (28) of different effector classes are stored for a vehicle class.

10. Method according to one of the preceding claims,
wherein the target (28) is a communication point of the vehicle (2).

11. Method according to one of the preceding claims,
wherein database descriptors (Dᵢᵢ) in the vehicle database (16) have different assigned effector classes, and an effector class is determined on the basis of the database descriptors (Dᵢᵢ) used in the classification.

12. Method according to one of the preceding claims,
wherein database descriptors (Dᵢᵢ) in the vehicle database (16) have different assigned effector methods, and an effector method is determined on the basis of the database descriptors (Dᵢᵢ) used in the classification.

13. Data medium (18) containing a vehicle database (16) for carrying out a method according to one of the preceding claims having a multiplicity of descriptions of different vehicle classes, each of which contains a multiplicity of characteristic image features of a vehicle class, wherein
a) the characteristic image features are multidimensional vehicle descriptors for key points of images of vehicles of a vehicle class,
b) each vehicle class in the vehicle database (16) has at least one assigned target (28) which indicates a predetermined point on a vehicle (2) assigned to the vehicle class at which an effector can unfold its effect in a desired manner, and the target (28) is indicated in its location relative to the location of multiple key points,
c) the vehicle database (16) stores database descriptors (Dᵢᵢ) for multiple image octaves (Oᵢ) in order to determine a range variable for the vehicle (2) on the basis of an image octave (Oᵢ) of the database descriptors (Dᵢᵢ) assigned to the vehicle descriptors and also an effector class dependent on the range variable.

## Revendications

1. Procédé permettant de classifier et de combattre un véhicule (2), dans lequel
a) une image (8) du véhicule (2) est enregistrée (6),
b) des particularités d'image caractéristiques sont établies (12) à partir de l'image (8), dans lequel, en tant que particularités d'image caractéristiques, des points clés sont établis (12) sur l'image (8) du véhicule (2), et pour chaque point clé, au moins un descripteur de véhicule multidimensionnel est établi,
c) les particularités d'image caractéristiques sont comparées (20) avec des particularités issues d'une base de données de véhicules (16) qui comprend une pluralité de descriptions comprenant des particularités caractéristiques de différentes classes de véhicule, et dans laquelle une classe de véhicule est associée à au moins un point cible (28) qui indique un point prédéterminé sur un véhicule, associé à la classe de véhicule, auquel un effecteur peut prendre effet de manière souhaitée, dans lequel le point cible (28) est indiqué au niveau de sa position par rapport à la position de plusieurs points clés,
d) le véhicule enregistré (2) est associé (26) à une classe de véhicule décrite dans la base de données de véhicules (16),
e) la position d'un point cible (28) sur le véhicule enregistré (2) est établie à partir de la position de plusieurs points clés sur l'image du véhicule,
f) des descripteurs de base de données (Dᵢᵢ) pour plusieurs octaves d'image (Oᵢ) sont mémorisés dans la base de données de véhicules (16), et une grandeur de distance par rapport au véhicule (2) ainsi qu'une classe d'effecteur dépendant de la grandeur de distance sont déterminées en fonction d'un octave d'image (Oᵢ) des descripteurs de base de données (Dᵢᵢ) associés aux descripteurs de véhicule.

2. Procédé selon la revendication 1, dans lequel la base de données de véhicules (16) comprend dans plusieurs classes de véhicule respectivement plusieurs images d'un véhicule sous différentes perspectives.

3. Procédé selon la revendication 1 ou 2, dans lequel des descripteurs de base de données (Dᵢᵢ) qui sont associés à différentes résolutions d'image de véhicules de cette classe de véhicule sont mémorisés dans la base de données de véhicules (16) pour une classe de véhicule pour plusieurs octaves d'image (Oᵢ).

4. Procédé selon l'une quelconque des revendications précédentes, dans lequel la classe de véhicule est une classe de navire et l'image (8) est enregistrée à partir d'un autre véhicule que le véhicule enregistré (2) .

5. Procédé selon l'une quelconque des revendications précédentes, dans lequel l'image (8) du véhicule (2) est enregistrée à partir d'un objet volant, et une distinction ami/ennemi (30) est effectuée dans l'objet volant à l'aide de la classification du véhicule (2).

6. Procédé selon l'une quelconque des revendications précédentes, dans lequel les descripteurs de véhicule (Dᵢᵢ) sont générés à partir de plusieurs images superposées du véhicule, et les descripteurs de base de données (Dᵢᵢ) ont également été établis à partir d'image qui ont été générées à partir de plusieurs images superposées d'un véhicule.

7. Procédé selon l'une quelconque des revendications précédentes, dans lequel des points clés pour plusieurs octaves d'image (Oᵢ) sont mémorisés dans la base de données de véhicules (16), et les positions des différents points cibles sont associées respectivement à un octave d'image (Oᵢ).

8. Procédé selon la revendication 7, dans lequel différentes classes d'effecteurs sont associées dans la base de données de véhicules à différents octaves d'image (Oᵢ) des points cibles (28), et en fonction d'un octave d'image (Oᵢ) des descripteurs de base de données (Dᵢᵢ) associés aux descripteurs de véhicule, l'une parmi plusieurs classes d'effecteurs est sélectionnée.

9. Procédé selon l'une quelconque des revendications précédentes, dans lequel, dans la base de données de véhicules (16), pour une classe de véhicule plusieurs points cibles (28) sont mémorisés dans leur position relative par rapport à des points clés, une classe d'effecteur est sauvegardée pour chaque point cible (28), et des points cibles (28) de différentes classes d'effecteur sont mémorisés pour une classe de véhicule.

10. Procédé selon l'une quelconque des revendications précédentes, dans lequel le point cible (28) est un point de communication du véhicule (2).

11. Procédé selon l'une quelconque des revendications précédentes, dans lequel différentes classes d'effecteur sont associées à des descripteurs (Dᵢᵢ) dans la base de données de véhicules (16), et une classe d'effecteur est déterminée en fonction des descripteurs de base de données (Dᵢᵢ) utilisés pour la classification.

12. Procédé selon l'une quelconque des revendications précédentes, dans lequel différents procédés d'effecteur sont associés à des descripteurs de base de données (Dᵢᵢ) dans la base de données de véhicules (16), et un procédé d'effecteur est déterminé en fonction des descripteurs de base de données (Dᵢᵢ) utilisés pour la classification.

13. Support de données (18), comprenant une base de données de véhicules (16) pour effectuer un procédé selon l'une quelconque des revendications précédentes avec une pluralité de descriptions de différentes classes de véhicule qui comprennent respectivement une pluralité de particularités d'image caractéristiques d'une classe de véhicule, dans lequel
a) les particularités d'image caractéristiques sont des descripteurs de véhicule multidimensionnels pour des points clés d'images de véhicules d'une classe de véhicule,
b) à chaque classe de véhicule dans la base de données de véhicules (16) est associé au moins un point cible (28) qui indique un point prédéterminé sur un véhicule (2), associé à la classe de véhicule, auquel un effecteur peut prendre effet de manière souhaitée, et le point cible (28) est indiqué dans sa position par rapport à la position de plusieurs points clés,
c) des descripteurs de base de données (Dᵢᵢ) pour plusieurs octaves d'image (Oᵢ) sont mémorisés dans la base de données de véhicules (16) pour déterminer une grandeur de distance par rapport au véhicule (2) en fonction d'un octave d'image (Oᵢ) des descripteurs de base de données (Dᵢᵢ) associés aux descripteurs de véhicule, ainsi qu'une classe d'effecteur dépendant de la grandeur de distance.
